# EUROPEAN PATENT APPLICATION

(11) **EP 1 096 417 A2**
(43) Date of publication of application: **02.05.2001**
(21) Application number: 00122910.3
(22) Date of filing: 20.10.2000
(51) Int. Cl.: G06K 9/20, A61B 5/117, G06K 9/00

(54) **Spurious fingerprint rejection by variable illumination**

(30) Priority: 01.11.1999 US 430946
(71) Applicant: TRW Inc., Redondo Beach, California 90278 (US)
(72) Inventor: Hsu, Shi-Ping, Pasadena, CA 91107 (US); Zsolnay, Denes L., Rolling Hills Estates, CA 90274 (US)
(74) Representative: Schmidt, Steffen J., Dipl.-Ing.

(57) **Abstract**

Apparatus and a method for its use, for rejecting spurious fingerprint images obtained from a fingerprint camera (20). The camera has internal illumination (14) that is changed significantly after capturing a candidate fingerprint image and before capturing a secondary fingerprint image. If the candidate and secondary fingerprint images are similar, as determined (60) in a fingerprint matching circuit (30) the fingerprint image is rejected as probably spurious. If the candidate and secondary images are dissimilar, the fingerprint image is accepted as probably genuine. Changing the internal illumination (14) may be effected by switching the illumination completely off, or by changing its brightness or color.

## Description

### BACKGROUND OF THE INVENTION

This invention relates generally to fingerprint pattern recognition systems and, more particularly, to techniques for capturing a fingerprint image. The use of fingerprint images and other biometric data has been proposed for use in a variety of security systems, for access to buildings, automobiles, computer files and so forth. In these and similar applications, a fingerprint image is usually captured using an optical camera operating on a principle of frustrated total internal reflection. When a finger is placed in contact with a face of a glass scanning window illuminated from the direction of the opposite face, internal reflection of the light from the face on which the finger is placed is significantly reduced by the presence of fingerprint ridges in close contact with the glass. In valley regions between the fingerprint ridges, total internal reflection takes place. Thus, an optical scanning system can detect the presence and contours of fingerprint ridges and can generate an image of the entire fingerprint.

There is a difficulty inherent to this process in that a latent fingerprint left on the imaging surface can, under certain accidentally or deliberately caused conditions of external illumination, result in a visible image. In some cases, an externally illuminated latent fingerprint image will be indistinguishable from a real fingerprint image. A related problem is that a transparent image of a fingerprint can, with suitable external illumination, appear to be from a real finger. Manufacturers of fingerprint imaging devices provide supplemental finger detection systems to work around this problem. These include various mechanical, optical or electrical sensors, the object of which is to detect the presence of a real finger placed on the imaging surface. Another technique includes examining the detected image for movement that would confirm the presence of a finger. The use of such supplemental sensors is a less than ideal solution to the problem because they may require additional hardware components. Movement detection requires additional software and processing power. Accordingly, there is still a need for an optical solution that can distinguish real from spurious fingerprint images, resulting from external illumination of latent fingerprints or transparent fingerprint images, without the need for supplemental finger detection devices. The present invention is directed to this end.

### SUMMARY OF THE INVENTION

The present invention resides in method and apparatus for rejecting spurious fingerprint images, such as may result from externally illuminated latent fingerprints or transparent fingerprint images on a scanning device. The method of the invention includes the steps of providing a normal internal illumination in a fingerprint camera; capturing a candidate fingerprint image in the fingerprint camera; changing the internal illumination; capturing a secondary fingerprint image after changing the internal illumination; comparing the candidate and secondary fingerprint images; and rejecting the fingerprint image if the candidate and secondary images are similar. The step of capturing a candidate fingerprint image includes first determining whether the image is fingerprint-like and, if not, capturing another image. The step of comparing includes determining whether the secondary fingerprint image is fingerprint-like and, if so, concluding that the candidate and secondary images are similar.

In one specific configuration of the invention, the step of changing the internal illumination includes switching the internal illumination off.

In terms of apparatus for rejection of spurious fingerprint images, the invention comprises a fingerprint camera, including a fingerprint scanner with internal illumination; a light controller, for providing normal internal illumination for capturing a candidate fingerprint image in the fingerprint camera, and changed internal illumination for capturing a secondary fingerprint image; a fingerprint matching circuit, for comparing the candidate and secondary fingerprint images; and control means for rejecting the fingerprint image if the candidate and secondary images are similar.

More specifically, the fingerprint matching circuit includes means for detecting a fingerprint-like image, wherein the candidate fingerprint image is captured only if it is determined to be a fingerprint-like image, and the secondary fingerprint image is deemed to be similar if it, also, is a fingerprint-like image.

It will be appreciated from the foregoing that the present invention represents a significant advance in the field of fingerprint scanning. In particular, the invention provides a convenient and rapid approach for detection of unwanted spurious fingerprint images that could result in false identification and acceptance of persons seeking access to devices under fingerprint control. Use of the invention significantly reduces the false acceptance rate in identification systems using fingerprint images. Other aspects and advantages of the invention will become apparent from the drawings briefly described below, and the more detailed description that follows.

### BRIEF DESCRIPTION OF THE DRAWINGS

FIG. 1 is a diagrammatic view showing principal components of a frustrated total internal reflection fingerprint camera of the prior art;
FIG. 2 is block diagram of a system for rejection of spurious fingerprint images in accordance with the present invention;
FIG. 3 is flowchart showing the principal functions performed by the system of FIG. 2; and
FIG. 4 is a flowchart similar to FIG. 3, but utilizing an additional feature, image assessment.

### DESCRIPTION OF THE PREFERRED EMBODIMENTS

As shown in the drawings for purposes of illustration, the present invention pertains to a method and apparatus for distinguishing between real and spurious fingerprint images in a fingerprint image processing system. A conventional fingerprint camera using a principle of frustration of total internal reflection, cannot always distinguish a real fingerprint image from a spurious image, such as an externally illuminated latent image left on a scanned glass window from a prior use of the camera, or an externally illuminated transparent fingerprint image placed on the window.

In accordance with the present invention, internal illumination of the scanning window is changed in some respect and the image is scanned again. If the scanned image varies as the illumination is varied, the scanned image is very likely to be of a real fingerprint. If the scanned image does not change significantly when the internal illumination is varied, the scanned image is likely to be a spurious image.

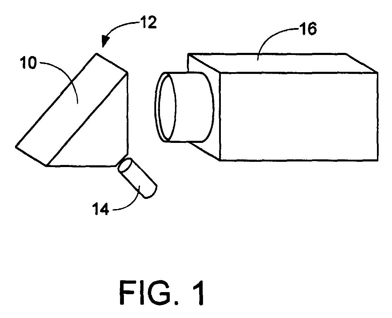

FIG. 1 depicts the internal components of a conventional fingerprint camera, including a finger platen 10, which is one face of a glass prism 12, an internal illuminator 14 that directs light onto the finger platen to illuminate the area on which the finger is placed, and a video camera 16. A typical fingerprint camera of this general type is the Verifier Model 200, manufactured by Cross Match Technologies, Inc., West Palm Beach, Florida 33401.

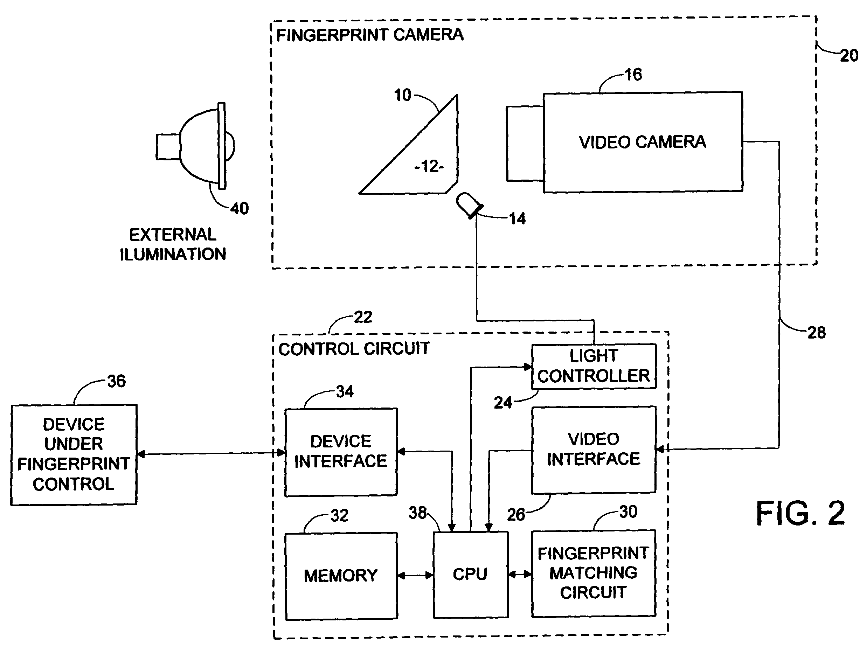

FIG. 2 shows a system in accordance with the present invention, including a conventional fingerprint camera 20 of the type illustrated in FIG. 1, and a control circuit 22. The control circuit 22 includes a light controller 24 coupled to the internal illuminator 14, a video interface 26 that receives a video image signal over line 28 from the video camera 16, a fingerprint matching circuit 30, a memory 32, and a device interface 34 coupled to a device 36 that is under fingerprint control. The device 36 may be a door to a building or vehicle, or may be a computer or database system, for example. The control circuit 22 also includes a central processing unit (CPU) 38 to control operations of the light controller 24, the video interface 26, the fingerprint matching circuit 30, the memory 32 and the device interface 34. FIG. 2 also shows a source of external illumination 40 positioned near the fingerprint camera 20. The external illumination 40 directed at a latent fingerprint or a transparent image of a fingerprint on the finger platen 10, can produce a spurious fingerprint image in the video camera 16.

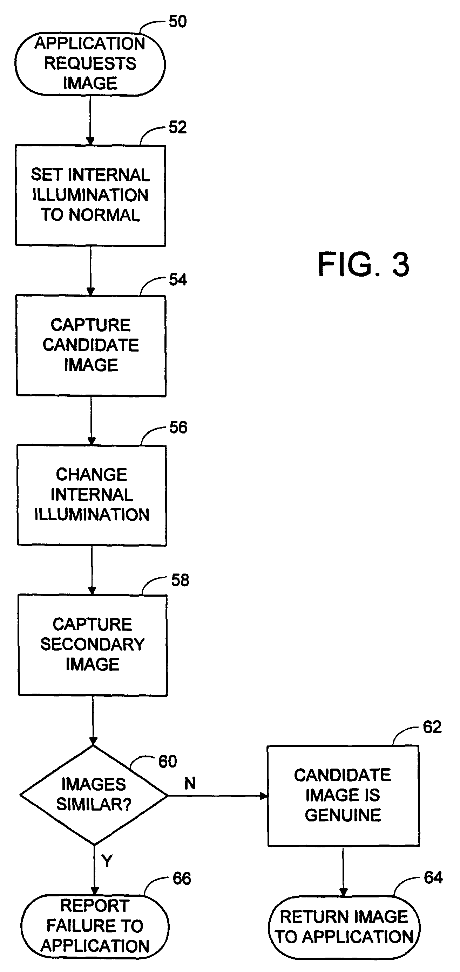

FIG. 3 shows the principal steps performed by the apparatus of the invention. When a fingerprint verification application requests that a fingerprint image be generated, as indicated in block 50, the internal illumination provided by illuminator 14 is set to its normal level, as indicated in block 52, and a primary fingerprint image is captured, as indicated in block 54. Then, the internal illumination is changed, as indicated in block 56, and a secondary fingerprint image is captured, as shown in block 58. In decision block 60, a determination is made as to whether the primary and secondary images are similar. If not, the primary image is deemed to be genuine, as indicated in block 62 and an appropriate return is made to the application requesting the information, as indicated at 64. If the images are determined to be similar to a desired degree in block 60, then the primary image is deemed to be not genuine, and an error condition is reported to the application requesting the information, as illustrated at 66.

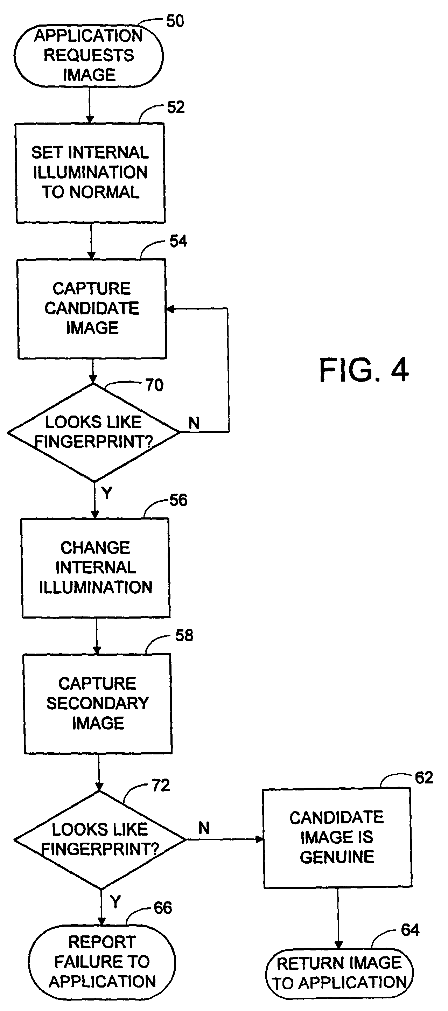

FIG. 4 shows a similar process to the one depicted in FIG. 3 but also includes an image assessment step. After capturing a primary image, as shown in step 54, a determination is made, as indicated in block 70, whether the primary image "looks like" a fingerprint. If not, another in a stream of images is captured before proceeding. If the captured image is "fingerprint-like," that is, if it contains characteristics of a fingerprint based on a preliminary analysis of the image characteristics, a change is made in the internal illumination, (as indicated in block 56). Determining if an image is fingerprint-like is a step that is already performed in conventional fingerprint scanning systems, which may use such a step to trigger the fingerprint matching process. Therefore, the method shown in FIG. 4 may be more readily adaptable to existing fingerprint matching systems than the method shown in FIG. 3.

After capturing a secondary image, as indicated in box 58, a determination is again made, as indicated in step 72, whether the primary image "looks like" a fingerprint. If not, i.e., if the secondary image captured after changing the internal illumination no longer looks like a fingerprint, then the primary image is deemed to be genuine, as shown in block 62 and return is made to the application, as shown in block 64. If the captured secondary image still looks like a fingerprint after the change in internal illumination, a failure or error is reported, as indicated in block 66.

The change in internal illumination effected in block 56 is a change in some property of the illumination, such as brightness or color. In the presently preferred embodiment of the invention, the internal illumination is switched completely off prior to capturing the secondary image. When a real finger is illuminated internally, it produces an image by frustrated total internal reflection of the light. External light is blocked by the finger and does not contribute to the image. When the internal illumination is changed, such as by switching it off, the image is changed, or vanishes completely if the internal light is turned off. A latent print, or a transparent image of a print does not produce its image from internal illumination. Rather, external light shines through the latent or transparent image and overwhelms the internal illumination. Thus, changing or extinguishing the internal illumination has little effect on the observed image. Accordingly, if the primary and secondary images are both fingerprint-like, or are similar, the images are most likely spurious ones and not images of genuine fingerprints.

It will be appreciated from the foregoing that the present invention represents a significant advance in fingerprint scanning techniques for use in a variety of identity verification applications. It will also be appreciated that, although a preferred embodiment of the invention has been described in detail by way of illustration, various modifications may be made without departing from the spirit or scope of the invention. Accordingly, the invention should not be limited except as by the appended claims.

## Claims

1. A method for rejection of spurious fingerprint images, the method comprising the steps of:
providing a normal internal illumination in a fingerprint camera;
capturing a candidate fingerprint image in the fingerprint camera;
changing the internal illumination;
capturing a secondary fingerprint image after changing the internal illumination;
comparing the candidate and secondary fingerprint images; and
rejecting the fingerprint image if the candidate and secondary images are similar.

2. A method as defined in claim 1, wherein:
the step of capturing a candidate fingerprint image includes first determining whether the image contains characteristics of a fingerprint and, if not, capturing another image; and
the step of comparing includes determining whether the secondary fingerprint image contains characteristics of a fingerprint and, if so, concluding that the candidate and secondary images are similar.

3. A method as defined in claim 1, wherein the step of changing the internal illumination includes switching the internal illumination off.

4. A method as defined in claim 2, wherein the step of changing the internal illumination includes switching the internal illumination off.

5. Apparatus for rejection of spurious fingerprint images, comprising:
a fingerprint camera, including a fingerprint scanner with internal illumination;
a light controller, for providing normal internal illumination for capturing a candidate fingerprint image in the fingerprint camera, and changed internal illumination for capturing a secondary fingerprint image;
a fingerprint matching circuit, for comparing the candidate and secondary fingerprint images; and
control means for rejecting the fingerprint image if the candidate and secondary images are similar.

6. Apparatus as defined in claim 5, wherein:
the fingerprint matching circuit includes means for detecting an image exhibiting characteristics of a fingerprint, wherein the candidate fingerprint image is captured only if it is determined to contain the characterisitics of a fingerprint, and the secondary fingerprint image is deemed to be similar if it, also, contains the characteristics of a fingerprint.
